# EUROPÄISCHE PATENTSCHRIFT

(11) **EP 0 523 454 B1**
(45) Veröffentlichungstag und Bekanntmachung des Hinweises auf die Patenterteilung: **20.11.1996**
(21) Anmeldenummer: 92111176.1
(22) Anmeldetag: 02.07.1992
(51) Int. Cl.: C02F 1/48

(54) **Gerät zur physikalischen Aufbereitung von Flüssigkeiten**
Apparatus for physical treatment of liquids
Appareil de traitement physique de liquides

(30) Priorität: 15.07.1991 DE 9108703 U
(43) Veröffentlichungstag der Anmeldung: 20.01.1993
(73) Patentinhaber: Schwedt, Josef, D-78586 Deilingen (DE); Schwedt, Hartwig, D-78586 Deilingen (DE); Schwedt, German, D-72355 Schömberg (DE)
(72) Erfinder: Schwedt, Josef, D-78586 Deilingen (DE); Schwedt, Hartwig, D-78586 Deilingen (DE); Schwedt, German, D-72355 Schömberg (DE)
(74) Vertreter: Kurz, Günther, Dipl.-Ing. Patentanwalt

(56) Entgegenhaltungen:
- EP-A- 0 255 914
- EP-A- 0 406 622
- WO-A-84/04294
- WO-A-90/01018
- DE-U- 8 904 085
- FR-A- 2 513 087
- FR-A- 2 632 296

## Beschreibung

Die Erfindung betrifft ein Gerät zur physikalischen Aufbereitung von Flüssigkeiten gemäß dem Oberbegriff des Anspruchs 1.

Derartige Flüssigkeitsaufbereitungsgeräte dienen u.a. dazu, durch eine entsprechende Behandlung der jeweiligen Flüssigkeit Kesselstein und vergleichbare Ablagerungen in von der Flüssigkeit durchströmten Leitungssystemen zu vermeiden.

In der DE-U-89 04085 ist ein Gerät zur magnetischen Flüssigkeitsaufbereitung beschrieben, bei dem ein Durchflußraum durch eine aus Kunststoffolien gebildete Zwischenwand in zwei Labyrinthkammern unterteilt wird, die über eine in der Zwischenwand vorgesehene Durchlaßöffnung miteinander verbunden sind. Die Zwischenwand dient hierbei weder als Pol noch als Elektrode. In dem Durchflußraum ist eine Vielzahl von stabförmigen Permanentmagneten angeordnet, die zwischen den beiden die Zwischenwand bildenden Kunststoffolien eingekapselt sind. Diese Permanentmagnete sind so angeordnet, daß sie sich jeweils quer zur Strömungsrichtung durch beide Labyrinthkammern erstrecken. Überdies sind die Magnete derart angeordnet, daß ein Pol in der einen Labyrinthkammer und der andere Pol in der anderen Labyrinthkammer liegt.

Bei einer aus der WO-A-84 04 294 bekannten Vorrichtung zur magnetischen Behandlung von Wasser oder dergleichen sind paarweise Magnetringe vorgesehen, wobei zwischen zwei solchen Magnetringen jeweils ein Kammerpaar liegt. Die Magnetringe besitzen entgegengesetzt gepolte Seiten.

Aus der EP-A-0 255 914 ist bekannt, zur Aufbereitung von Flüssigkeiten ein Magnetfeld durch eine Magnetspule zu erzeugen, die eine einen Gehäuseinnenraum in zwei Kammern unterteilende Zwischenwand umgibt und zu dieser konzentrisch ist. Eine vergleichbare Vorrichtung ist auch aus der EP-A-0 406 622 bekannt. Auch in diesem Fall wird eine die Trennwand umgebende, zu dieser konzentrische Magnetspule verwendet.

Bei einem aus der DE 36 32 257 A1 bekannten Gerät zur physikalischen Flüssigkeitsaufbereitung sind in der radial durch zwei koaxial ineinander angeordnete Polrohre begrenzten Durchflußkammer Labyrinthwände angeordnet, die über nichtmagnetische Abstandshalter am inneren Polrohr abgestützt sind und parallel zu den Rohrachsen verlaufen. Durch die Labyrinthwände wird zwar eine Umlenkung der Flüssigkeit bewirkt, was eine gewisse Verlängerung des Durchflußweges zur Folge hat. Ungünstig ist jedoch, daß auch die zusätzliche Wegstrecke des Strömungspfades zwischen denselben Polrohren verläuft, so daß sich für sämtliche Abschnitte des Strömungspfades stets dasselbe magnetische Feld ergibt und eine Variation der Feldstärke für unterschiedliche Abschnitte des Strömungspfades oder eine Beaufschlagung dieser Strömungspfadabschnitte durch Felder unterschiedlicher Art von vornherein ausgeschlossen ist.

Ziel der Erfindung ist es, ein verbessertes Gerät der eingangs genannten Art zu schaffen, das bei einfachem und im Hinblick auf unterschiedliche Aufbereitungskriterien variablem Aufbau weiterhin einen verlängerten Durchflußweg gewährleistet und gleichzeitig insbesondere auch eine unterschiedliche Behandlung der Flüssigkeit in den verschiedenen Abschnitten des Strömungspfades ermöglicht.

Die Aufgabe wird nach der Erfindung durch die im Kennzeichen des Anspruchs 1 angegebenen Merkmale gelöst.

Aufgrund dieser Ausbildung wird erreicht, daß einerseits ein verlängerter Durchflußweg geschaffen wird und andererseits die verschiedenen Abschnitte des Strömungspfades derart voneinander getrennt sind, daß in den unterschiedlichen Strömungspfadabschnitten gewünschtenfalls ohne größeren Aufwand, beispielsweise durch einen unterschiedlichen Abstand zwischen den Elektroden bzw. Polteilen, unterschiedliche Feldstärken erzielt werden können und darüber hinaus auch eine Aufbereitung mittels Feldern unterschiedlicher Art möglich ist.

Vorteilhafterweise sind die Durchflußkammern jeweils ringförmig ausgebildet und radial durch die Innenwand des Gehäuses sowie ein vorzugsweise zentrales Innenteil begrenzt, wobei diese ringförmigen Durchflußkammern in Axialrichtung hintereinander angeordnet sind.

Bei dieser Ausführungsvariante können die ringförmigen Durchflußkammern lediglich axial oder auch in Umfangsrichtung von der betreffenden Flüssigkeit durchströmt sein.

Eine bevorzugte Ausführungsvariante, bei der die ringförmigen Durchflußkammern zur weiteren Erhöhung des Durchflußweges jeweils in Umfangsrichtung von der betreffenden Flüssigkeit durchströmt werden, ist dadurch gegeben, daß die einzige Durchgangsöffnung der zwischen zwei benachbarten ringförmigen Durchflußkammern angeordneten Trennwand in Umfangsrichtung versetzt gegenüber der in die erste Durchflußkammer mündenden Einlaßöffnung sowie der der zweiten Durchflußkammer zugeordneten Auslaßöffnung angeordnet ist, in der ersten Durchflußkammer ein erstes radiales Absperrelement vorgesehen ist, welches in Umfangs- und Strömungsrichtung betrachtet einerseits vor der Einlaßöffnung und andererseits hinter der Durchgangsöffnung angeordnet ist, und in der zweiten Durchflußkammer ein zweites radiales Absperrelement vorgesehen ist, welches in Umfangs- und Strömungsrichtung betrachtet einerseits vor der Durchgangsöffnung und andererseits hinter der Auslaßöffnung angeordnet ist. Hierbei wird zunächst die erste ringförmige Durchflußkammer in Umfangsrichtung von der Flüssigkeit durchströmt, bevor diese Flüssigkeit über die in der Trennwand vorgesehene Durchgangsöffnung in die zweite ringförmige Durchflußkammer eintritt. Auch die zweite Durchflußkammer wird wiederum in Umfangsrichtung von der Flüssigkeit durchströmt, bevor diese über die Auslaßöffnung in das Leitungssystem bzw. über die Durchgangsöffnung einer weiteren Trennwand in die nächste ringförmige Durchflußkammer fließt. Aufgrund der beträchtlichen Verlängerung des Strömungsweges ist der Energiebedarf entsprechend herabgesetzt.

Die unterschiedlichen Durchflußkammern zugeordneten Innenteile können zumindest teilweise eine unterschiedliche axiale Länge besitzen. Dadurch wird erreicht, daß sich je nach Höhe bzw. axialer Länge der Innenteile gleiche oder unterschiedliche axiale Weiten der Durchflußkammern ergeben, wodurch sich insbesondere auch die Abstände zwischen den Polplatten bzw. Elektroden und damit auch die betreffenden Feldstärken ändern. Allein durch die Wahl der Abmessungen der Innenteile lassen sich somit bereits unterschiedliche Aufbereitungsbedingungen in den verschiedenen Strömungspfadabschnitten schaffen. Hierzu sind diese vorzugsweise als Fixierringe für die Trennwand ausgebildeten Innenteile zweckmäßigerweise auswechselbar.

Eine weitere vorteilhafte Ausführungsvariante des erfindungsgemäßen Geräts, bei dem die jeweilige Flüssigkeit beispielsweise einem elektrischen Feld ausgesetzt ist, zeichnet sich dadurch aus, daß die beiden axial äußeren Scheibenteile sowie die scheibenförmige Trennwand jeweils aus elektrisch leitendem Material bestehen und eine Elektrode bilden, wobei die Trennwand eine für die beiden benachbarten Durchflußkammern gemeinsame Elektrode ist, und daß der Außenring, die Innenteile sowie die Absperrelemente jeweils aus elektrisch isolierendem Material bestehen. Ist die jeweilige Flüssigkeit demgegenüber einem magnetischen Feld ausgesetzt, so ist die Trennwand als für die beiden benachbarten Durchflußkammern gemeinsame Polplatte ausgebildet.

Eine besonders vorteilhafte Ausführungsform des erfindungsgemäßen Geräts, bei dem die ringförmigen Durchflußkammern im wesentlichen nur axial durchströmt werden, ist im Anspruch 8 angegeben.

Bei dieser Ausführungsform können die dem Feld ausgesetzten Strömungswege sowie Feldstärken beispielsweise dadurch variiert werden, daß für die betreffenden zylindrischen Innenteile eine entsprechende axiale Länge bzw. unterschiedliche Querschnittsabmessungen gewählt werden. Somit können für unterschiedliche Durchflußkammern auf einfachste Weise wiederum unterschiedliche Voraussetzungen für die physikalische Aufbereitung geschaffen werden, ohne daß dazu die äußere Beschaltung geändert wird.

Gemäß den Ansprüchen 13 bis 15 können die zylindrischen Innenteile benachbarter Durchflußkammern auf besonders vorteilhafte Weise wiederum eine für die beiden Kammern gemeinsame Elektrode bzw. ein für diese Kammern gemeinsames Polteil bilden.

In den Unteransprüchen sind weitere vorteilhafte Ausführungsvarianten der Erfindung angegeben.

Die Erfindung wird im folgenden anhand von Ausführungsbeispielen unter Bezugnahme auf die Zeichnung näher erläutert; in dieser zeigt:
- Fig. 1: eine schematische, teilweise geschnittene Darstellung einer ersten Ausführungsvariante eines Gerätes zur physikalischen Aufbereitung von Flüssigkeiten,
- Fig. 2: eine schematische, teilweise geschnittene Darstellung einer zweiten Ausführungsvariante des Flüssigkeitsaufbereitungsgerätes, und
- Fig. 3: eine schematische, teilweise geschnittene Darstellung einer dritten Ausführungsvariante des Flüssigkeitsaufbereitungsgeräts.

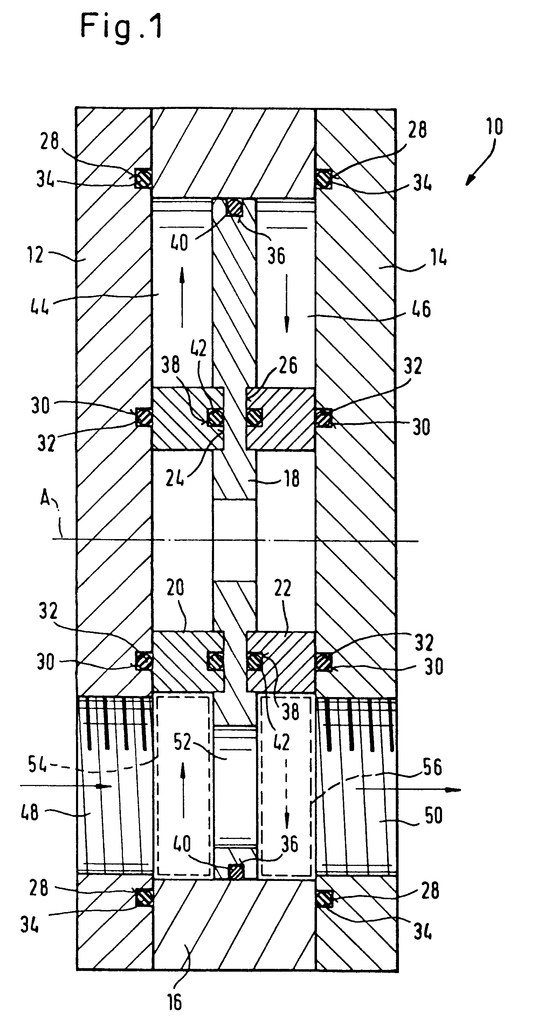

In Fig. 1 ist eine Ausführungsvariante eines Geräts zur physikalischen Aufbereitung von Flüssigkeiten, insbesondere von Wasser, gezeigt, bei der die Flüssigkeit in den jeweiligen Strömungspfadabschnitten einem elektrischen Feld, insbesondere einem Impulsfeld ausgesetzt ist.

Das Gehäuse 10 dieses Geräts umfaßt zwei einen axialen Abstand zueinander aufweisende kreisförmige äußere Scheibenteile 12, 14 sowie einen zwischen diesen beiden Scheibenteilen 12, 14 angeordneten Außenring 16. Innerhalb des Gehäuses 10 ist eine ringförmige Trennwand 18 angeordnet, die zu den beiden kreisförmigen Scheibenteilen 12, 14 koaxial und radial innen am Außenring 16 des Gehäuses 10 abgestützt ist.

Die Trennwand 18 ist axial durch zwei ringförmige Innenteile 20, 22 fixiert, die zwischen dem linken Scheibenteil 12 und der Trennwand 18 bzw. zwischen dieser und dem rechten Scheibenteil 14 angeordnet sind.

Die als Ringscheibe ausgebildete Trennwand 18 weist auf ihren beiden, den kreisförmigen Scheibenteilen 12, 14 zugewandten Seiten jeweils eine Ringnut 24, 26 auf, in die das betreffende ringförmige Innenteil 20 bzw. 22 passend eingreift. Demnach sind die ringartigen Innenteile 20, 22 durch die ringscheibenartige Trennwand 18 radial fixiert.

Die beiden äußeren Scheibenteile 12, 14 sind im Bereich des Außenringes 16 sowie im Bereich des zugeordneten Innenteils 20 bzw. 22 jeweils mit einer Ringnut 28, 30 versehen, in denen Dichtringe 32, 34 aufgenommen sind. Entsprechende Ringnuten 36, 38 für Dichtringe 40, 42 sind auch am Außenumfang der Trennwand 18 sowie an den dieser Trennwand zugewandten Seiten der Innenteile 20, 22 vorgesehen.

Demnach ergibt sich zwischen dem linken Scheibenteil 12, dem Außenring 16, der Trennwand 18 sowie dem linken Innenteil 20 eine durch die betreffenden Dichtringe 32, 34, 40, 42 abgedichtete erste ringförmige Durchflußkammer 44 und zwischen dem rechten Scheibenteil 14, dem Außenring 16, der Trennwand 18 sowie dem rechten Innenteil 22 eine durch die betreffenden Dichtringe 32, 34, 40, 42 abgedichtete zweite ringförmige Durchflußkammer 46 für die betreffende Flüssigkeit.

Das linke kreisförmige Scheibenteil 12 ist mit einer gegenüber der Längsachse A radial nach außen versetzten Einlaßöffnung 48 versehen, die radial im Bereich der ersten ringförmigen Durchflußkammer 44 angeordnet ist und in diese mündet.

Das rechte kreisförmige Scheibenteil 14 ist mit einer Auslaßöffnung 50 versehen, welche ebenfalls gegenüber der Längsachse A radial nach außen versetzt und axial mit der Einlaßöffnung 48 ausgerichtet ist. Diese Auslaßöffnung 50 ist radial im Bereich der ringförmigen zweiten Durchflußkammer 46 angeordnet und mit dieser verbunden.

Die zwischen den beiden benachbarten ringförmigen Durchflußkammern 44, 46 angeordnete kreisscheibenförmige Trennwand 18 ist im vorliegenden Fall mit einer einzigen Durchgangsöffnung 52 versehen. Diese Durchgangsöffnung 52 weist bezüglich deren Mittelpunkt den gleichen radialen Abstand zur Längsachse A auf wie die Einlaßöffnung 48 bzw. die Auslaßöffnung 50, besitzt jedoch einen etwas kleineren Durchmesser als diese beiden Öffnungen 48, 50.

In Fig. 1 ist die Trennwand 18 zur einfacheren Darstellung der Durchgangsöffnung 52 gegenüber der endgültigen Einbaustellung um die Achse A verdreht. In der tatsächlichen Einbaustellung dieser Trennwand 18 ist diese Durchgangsöffnung 52 sowohl gegenüber der Einlaßöffnung 48 als auch gegenüber der Auslaßöffnung 50 in Umfangsrichtung versetzt. Hierbei ist diese Durchgangsöffnung 52 in Umfangsrichtung gesehen zwar im Bereich der Einlaß- bzw. Auslaßöffnung 48, 50 angeordnet, eine Überschneidung dieser Öffnungen findet jedoch nicht statt.

In der ersten Durchlaßkammer 44 ist ein erstes radiales Absperrelement 54 angeordnet, welches in Umfangs- und Strömungsrichtung betrachtet einerseits vor der Einlaßöffnung 48 und andererseits hinter der Durchgangsöffnung 52 liegt. In Fig. 1 ist dieses strichliniert angedeutete Absperrelement 54 der einfacheren Darstellung halber wiederum gegenüber der endgültigen Einbaulage in Umfangsrichtung versetzt.

In der zweiten ringförmigen Durchflußkammer 46 ist ein zweites radiales Absperrelement 56 angeordnet, welches in Umfangs- und Strömungsrichtung betrachtet einerseits vor der Durchgangsöffnung 52 und andererseits hinter der Auslaßöffnung 50 liegt. In Fig. 1 ist auch dieses wiederum strichliniert angedeutete Absperrelement 56 der einfacheren Darstellung halber gegenüber der tatsächlichen Einbaulage in Umfangsrichtung versetzt. Die beiden in den ringförmigen Durchflußkammern 44, 46 angeordneten Absperrelemente 54, 56 sind beim vorliegenden Ausführungsbeispiel axial miteinander ausgerichtet.

Demnach werden die beiden in Strömungsrichtung der Flüssigkeit hintereinanderliegenden und nur über die Durchgangsöffnung 52 in der Trennwand 18 miteinander verbundenen Durchflußkammern wie folgt von der aufzubereitenden Flüssigkeit durchströmt:

Die aufzubereitende Flüssigkeit gelangt über die Einlaßöffnung 48 in die erste ringförmige Durchflußkammer 44, wo sie durch das erste radiale Absperrelement 54 gezwungen wird, diese erste Durchflußkammer 44 in der einen Umfangsrichtung zu durchströmen, bis sie wieder auf dieses in Strömungsrichtung hinter der Durchgangsöffnung 52 der Trennwand 18 liegende erste radiale Sperrelement 54 trifft und demzufolge durch die Durchgangsöffnung 52 der Trennwand 18 hindurch in die zweite ringförmige Durchflußkammer 46 gelangt. Aufgrund des zweiten radialen Absperrelements 56 in der zweiten Durchflußkammer 46 wird die Flüssigkeit weiter gezwungen, diese zweite Durchflußkammer 46 in der umgekehrten Umfangsrichtung zu durchströmen, bis sie wiederum auf dieses in Strömungsrichtung hinter der Auslaßöffnung 50 liegende zweite Absperrelement 56 trifft und demzufolge über die Auslaßöffnung 50 im rechten Scheibenteil 14 abgeführt wird.

Die beiden Durchflußkammern 44, 46 werden demnach jeweils in unterschiedlichen Umfangsrichtungen durchströmt, wodurch sich eine beträchtliche Verlängerung des Strömungswegs ergibt und der Energiebedarf entsprechend herabgesetzt wird. Ein maximaler Durchflußweg wird erreicht, wenn die Einlaß- und Auslaßöffnungen 48, 50 miteinander axial ausgerichtet sind, die Durchgangsöffnung 52 in Umfangsrichtung betrachtet ohne Überschneidung möglichst im Bereich dieser beiden Öffnungen 48, 50 angeordnet ist und die beiden ebenfalls axial miteinander ausgerichteten radialen Absperrelemente 54, 56 wiederum in Umfangsrichtung betrachtet in dem Bereich zwischen den Einlaß- und Auslaßöffnungen 48, 50 einerseits und der Durchgangsöffnung 52 andererseits angeordnet sind, in dem diese Öffnungen in Umfangsrichtung den geringeren Abstand zueinander aufweisen.

Im vorliegenden Fall sind die beiden als Fixierringe für die Trennwand 18 ausgebildeten Innenteile 20, 22, der konzentrische Außenring 16 sowie die radialen Absperrelemente 54, 56 jeweils aus elektrisch isolierendem Material hergestellt. Demgegenüber bestehen die beiden axial äußeren, konzentrischen Scheibenteile 12, 14 sowie die konzentrische scheibenförmige Trennwand 18 jeweils aus elektrisch leitendem Material. Die Scheibenteile 12, 14 sowie die ringscheibenförmige Trennwand 18 bilden jeweils eine Elektrode, wobei die Trennwand 18 als für die beiden benachbarten Durchflußkammern 44, 46 gemeinsame Elektrode dient.

Soll die jeweilige Flüssigkeit einem magnetischen Feld ausgesetzt sein, so kann diese Trennwand 18 grundsätzlich auch als für die beiden benachbarten Durchflußkammern 44, 46 gemeinsame Polplatte ausgebildet sein.

In beiden Fällen erfolgt die Aufteilung in mehrere Strömungsräume durch eine als gemeinsamer Pol dienende Zwischenscheibe. Dadurch, daß sich diese Zwischenscheibe beim dargestellten Ausführungsbeispiel radial beidseitig bis in den jeweiligen Randbereich der Strömungsräume erstreckt, werden auf einfachste Weise homogene, die jeweiligen Strömungsräume vollständig erfassende Felder erzielt. Beispielsweise im Falle einer rein elektrischen Lösung kann der radial äußere Abschluß der beiden Strömungsräume durch einen gemeinsamen, elektrisch nicht leitenden Ring 16 gebildet sein.

Beim in Fig. 1 gezeigten Ausführungsbeispiel besitzen die ringförmigen, zu den Scheibenteilen 12, 14, der Trennwand 18 sowie dem Außenring 16 koaxialen ringförmigen Innenteile 20, 22 eine gleiche Höhe bzw. axiale Länge. Diese auswechselbaren Innenteile 20, 22 können jedoch auch eine unterschiedliche axiale Länge besitzen, so daß sich ein unterschiedlicher Abstand zwischen dem linken Scheibenteil 12 und der Trennwand 18 einerseits und der Trennwand 18 und dem rechten Scheibenteil 14 andererseits ergibt und sich demnach in den beiden ringförmigen Durchflußkammern 44, 46 unterschiedliche Feldstärken einstellen.

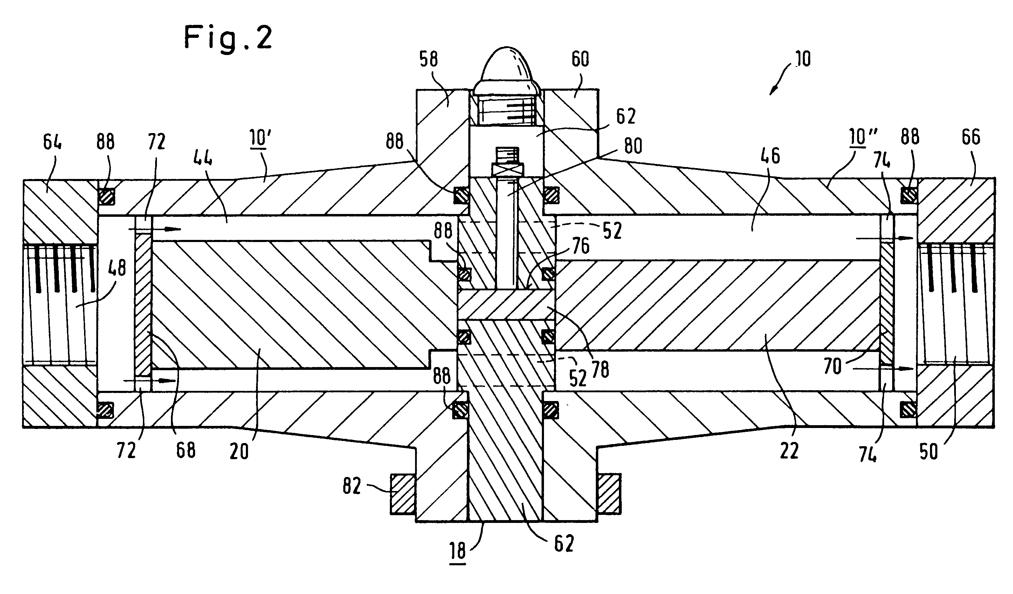

Die in Fig. 2 gezeigte weitere Ausführungsvariante eines Flüssigkeitsaufbereitungsgerätes unterscheidet sich von der ersten Ausführungsvariante in erster Linie dadurch, daß die beiden ringförmigen Durchflußkammern 44, 46 nicht in Umfangsrichtung, sondern lediglich axial durchströmt werden. Auch in diesem Falle wird die Flüssigkeit einem elektrischen Feld bzw. elektrischen Feldern ausgesetzt.

Gemäß Fig. 2 umfaßt das Gehäuse 10 dieser weiteren Ausführungsvariante mehrere rohrförmige Gehäuseabschnitte 10', 10''. Diese koaxialen, in Axialrichtung hintereinander angeordneten rohrförmigen Gehäuseabschnitte 10', 10'' begrenzen die ringförmigen Durchflußkammern 44, 46 radial nach außen.

Das einem jeweiligen Gehäuseabschnitt 10', 10'' zugeordnete zentrale Innenteil 20, 22 ist jeweils zylindrisch ausgebildet und begrenzt die betreffende ringförmige Durchflußkammer 44, 46 radial nach innen.

Die beiden rohrförmigen Gehäuseabschnitte 10', 10'' sind jeweils mit einem Ringflansch 58, 60 versehen, zwischen denen die Trennwand 18 über ihren Rand 62 eingespannt ist. Hierbei werden die beiden rohrförmigen Gehäuseabschnitte 10', 10'' im Bereich der Ringflansche 58, 60 über Befestigungsmittel 82 zusammengehalten. Hierzu können beispielsweise Befestigungsringe oder dergl. vorgesehen sein.

Die zwischen den beiden Gehäuseabschnitten 10', 10'' fixierte scheibenartige Trennwand 18 dient gleichzeitig als Trägerelement für die den beiden benachbarten Durchflußkammern 44, 46 zugeordneten Innenteile 20, 22.

Die Einlaßöffnung 48 und die Auslaßöffnung 50 sind jeweils in einer dem betreffenden rohrförmigen Gehäuseabschnitt 10', 10'' zugeordneten Stirnwand 64, 66 vorgesehen, die beim vorliegenden Ausführungsbeispiel jeweils durch einen Anschlußflansch mit einem Innengewinde gebildet ist. Die beiden Öffnungen 48, 50 sind zu den beiden zylindrischen Innenteilen 20, 22 konzentrisch und weisen einen Innendurchmesser auf, der geringfügig kleiner als der Innendurchmesser der rohrförmigen Gehäuseabschnitte 10', 10'' ist.

Die zentralen, zylindrisch ausgebildeten Innenteile 20, 22 weisen mit ihrem von der Trennwand 18 abgewandten Ende jeweils einen Abstand von der betreffenden Stirnwand 64, 66 auf. Die Innenteile 20, 22 sind an diesen freien Enden jeweils über einen Stützflansch 68, 70 radial im zugeordneten rohrförmigen Gehäuseabschnitt 10', 10'' abgestützt. Der jeweilige Stützflansch 68, 70 ist mit in die betreffende ringförmige Durchflußkammer 44, 46 mündenden Durchgangsöffnungen 72, 74 versehen.

Während beim Ausführungsbeispiel gemäß Fig. 1 lediglich eine einzige Durchgangsöffnung in der Trennwand 18 vorgesehen ist, ist beim vorliegenden Ausführungsbeispiel diese Trennwand 18 mit mehreren, in Umfangsrichtung verteilten und die beiden benachbarten Durchflußkammern 44, 46 miteinander verbindenden Durchgangsöffnungen 52 versehen.

Im vorliegenden Fall weisen die beiden zylindrischen Innenteile 20, 22 zwar eine im wesentlichen gleiche axiale Länge, jedoch einen unterschiedlichen Durchmesser auf. Aufgrund der unterschiedlichen Durchmesser ergeben sich in den beiden Durchflußkammern 44, 46 auch wiederum unterschiedliche Feldstärken. Grundsätzlich können auch unterschiedliche axiale Längen vorgesehen sein, so daß sich in den beiden Durchflußkammern 44, 46 unterschiedlich lange Strömungswege ergeben.

Die beiden zylindrischen Innenteile 20, 22 sind über einen axialen, sich durch eine zentrale Öffnung 76 in der Trennwand 18 hindurcherstreckenden Fortsatz 78 miteinander verbunden. Dieser Fortsatz 78 ist vorzugsweise an einem der beiden Innenteile 20, 22 vorgesehen und mit dem anderen Innenteil lösbar verbunden, vorzugsweise verschraubt. Zweckmäßigerweise besteht dieser Fortsatz 78 aus demselben Material wie die beiden miteinander zu verbindenden Innenteile.

Beim in Fig. 2 gezeigten Ausführungsbeispiel bestehen die beiden rohrförmigen Gehäuseabschnitte 10', 10'', die beiden zugeordneten zylindrischen Innenteile 20, 22 sowie der diese verbindende axiale Fortsatz 78 jeweils aus elektrisch leitendem Material. Hierbei bilden die beiden zylindrischen Innenteile 20, 22 eine für die beiden ringförmigen Durchflußkammern 44, 46 gemeinsame Elektrode.

Demgegenüber sind die Trennwand 18 sowie die Stützflansche 68, 70 jeweils aus elektrisch isolierendem Material hergestellt. Die durch Gewindeflansche gebildeten Stirnwände 64, 66 können entweder aus elektrisch leitendem oder aus elektrisch isolierendem Material bestehen. Sie können einstückig mit dem betreffenden Gehäuseabschnitt 10', 10'' oder auch getrennt von diesem ausgebildet sein.

Die beiden eine gemeinsame Elektrode für die beiden Durchflußkammern 44, 46 bildenden Innenteile 20, 22 sind über ein an der Trennwand 18 vorgesehenes elektrisch leitendes Verbindungselement 80 und den ebenfalls elektrisch leitenden axialen Fortsatz 78 von der jeweiligen Energiequelle beaufschlagbar.

Zur Abdichtung der beiden ringförmigen Durchflußkammern 44, 46 sind die betreffenden Teile wiederum über Dichtringe 88 gegenseitig abgedichtet. Diese Dichtringe 88 sitzen wiederum in Ringnuten, die am einen oder dem anderer der beiden jeweils aneinandergrenzenden Teile vorgesehen sind.

Soll die jeweilige Flüssigkeit einem magnetischen Feld bzw. magnetischen Feldern ausgesetzt werden, so können die über den axialen Fortsatz 78 miteinander verbundenen Innenteile 20, 22 als für die beiden benachbarten Durchflußkammern 44, 46 gemeinsames Polteil ausgebildet sein, wobei vorzugsweise auch der zentrale Fortsatz 78 aus magnetisierbarem Material besteht.

Bei dieser in Fig. 2 gezeigten Ausführungsvariante tritt die jeweilige Flüssigkeit somit über die Einlaßöffnung 48 in die erste ringförmige Durchflußkammer 44 ein, welche im wesentlichen axial durchströmt wird, worauf die Flüssigkeit durch die Durchgangsöffnungen 52 in der Trennwand 18 hindurch in die zweite ringförmige Durchflußkammer 46 eintritt, die ebenfalls im wesentlichen axial durchströmt wird, bevor die Flüssigkeit über die Auslaßöffnung 50 nach außen abgeführt wird.

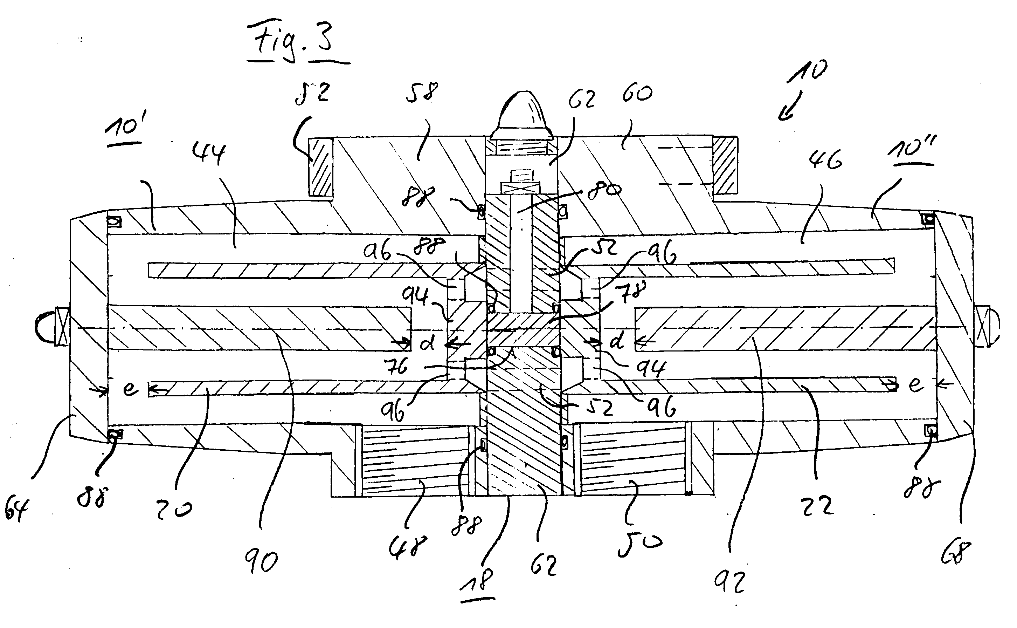

Die in Fig. 3 gezeigte weitere Ausführungsvariante unterscheidet sich von der gemäß Fig. 2 im wesentlichen dadurch, daß die Einlaß- und Auslaßöffnungen 48, 50 auf einer Längsseite des Gehäuses 10 beiderseits der Trennwand 18 und dieser unmittelbar benachbart angeordnet sind, daß die beiden Innenteile 20, 22 jeweils hohlzylindrisch ausgebildet sind und daß sich in jedes hohlzylindrische Innenteil 20, 22 jeweils ein zylindrischer Fortsatz 90 bzw. 92 erstreckt, der am außerhalb des betreffenden Innenteils 20, 22 gelegenen Ende an der jeweiligen Stirnwand 64, 68 angebracht ist. Vom Boden 94 der nach außen zu den Stirnwänden 64, 68 hin offenen hohlzylindrischen Innenteile 20, 22 weisen die zylindrischen Fortsätze 90, 92 jeweils einen Abstand d auf. Im Boden 94 eines jeden hohlzylindrischen Innenteils 20, 22 sind durchgehende, in Umfangsrichtung verteilte Öffnungen 96 vorgesehen, die zusammen mit den in der Trennwand 18 vorgesehenen Durchgangsöffnungen 52 für eine Verbindung zwischen den beiden Durchflußkammern 44, 46 sorgen. Die offenen Enden der hohlzylindrischen Innenteile 20, 22 weisen jeweils einen Abstand e zur benachbarten Stirnwand 64, 68 auf. Die beim Ausführungsbeispiel gemäß Fig. 2 vorgesehenen Stützflansche 68, 70 sind im vorliegenden Fall weggelassen. Die Ringflansche 58, 60 weisen in Axialrichtung, d.h. parallel zur Längsrichtung der Innenteile 20, 22 betrachtet, größere Abmessungen als beim vorangegangenen Ausführungsbeispiel auf. Die Einlaßöffnung 48 ist radial durch den dem Gehäuseabschnitt 10' zugeordneten Ringflansch 58 und die Auslaßöffnung 50 radial durch den dem Gehäuseabschnitt 10'' zugeordneten Ringflansch 60 hindurchgeführt. Diese beiderseits der Trennwand 18 vorgesehenen und unmittelbar an diese angrenzenden Öffnungen 48, 50 sind in Axialrichtung miteinander ausgerichtet.

Bei dieser in Fig. 3 dargestellten Ausführungsvariante besitzen die hohlzylindrischen Innenteile 20, 22 einen gleich großen Außendurchmesser sowie einen gleich großen Innendurchmesser, wobei der Außendurchmesser dieser Innenteile 20, 22 wiederum kleiner als der Innendurchmesser der ebenfalls hohlzylindrischen Gehäuseabschnitte 10', 10'' ist. Darüber hinaus besitzen auch die zylindrischen Fortsätze 90, 92 einen gleichen Durchmesser, der kleiner als der Innendurchmesser der hohlzylindrischen Innenteile 20, 22 ist. Grundsätzlich können jedoch auch hier wiederum unterschiedliche Abmessungen vorgesehen sein. Die hohlzylindrischen Innenteile 20, 22 sowie die zylindrischen Fortsätze 90, 92 weisen eine im wesentlichen gleiche axiale Länge auf. Grundsätzlich können auch hier jedoch wiederum unterschiedliche Längen für die beiden Innenteile 20, 22 bzw. die beiden zylindrischen Fortsätze 90, 92 vorgesehen sein.

Die jeweilige Flüssigkeit wird zweckmäßigerweise wiederum einem elektrischen Feld bzw. elektrischen Feldern ausgesetzt. Hierzu bestehen nicht nur die beiden rohrförmigen Gehäuseabschnitte 10', 10'', die beiden zugeordneten hohlzylindrischen Innenteile 20, 22 sowie der diese verbindende axiale Fortsatz 78, sondern darüber hinaus auch die beiden zylindrischen Fortsätze 90, 92 sowie die beiden Stirnwände 64,68 jeweils aus elektrisch leitendem Material. Die zylindrischen Fortsätze 90, 92 sind beispielsweise über die Stirnwände 64, 68 mit den die Durchflußkammern 44, 46 radial nach außen begrenzenden rohrförmigen Gehäuseabschnitten 10', 10'' elektrisch verbunden. In jedem der beiden Durchflußkammern 44, 46 ergeben sich somit elektrische Felder zwischen der äußeren Rohrwand des Gehäuseabschnittes 10', 10'' und dem hohlzylindrischen Innenteil 20, 22 sowie zwischen diesem hohlzylindrischen Innenteil 20, 22 und dem zylindrischen Fortsatz 90, 92. Die für die elektrische Feldstärke maßgeblichen Abstände zwischen den Leitern können in den beiden Durchflußkammern 44, 46, wie beim dargestellten Ausführungsbeispiel, gleich groß oder auch unterschiedlich sein. Darüber hinaus können auch die Abstände zwischen der Innenwand des jeweiligen Gehäuseabschnittes 10', 10'' und dem Innenteil 20, 22 sowie zwischen dem Innenteil 20, 22 und dem zylindrischen Fortsatz 90, 92 gleich groß oder unterschiedlich sein.

Bei dieser Ausführungsvariante tritt die jeweilige Flüssigkeit über die Einlaßöffnung 48 in die erste ringförmige Durchflußkammer 44 ein, welche axial in unterschiedlichen Richtungen zweimal durchströmt wird, bis die Flüssigkeit durch die Öffnungen 96 im Boden 94 des hohlzylindrischen Innenteils 20 sowie die Durchgangsöffnungen 52 in der Trennwand 18 hindurch in die zweite ringförmige Durchflußkammer 46 eintritt, die ebenfalls axial in entgegengesetzten Richtungen zweimal durchströmt wird, bevor die Flüssigkeit über die Auslaßöffnung 50 nach außen abgeführt wird. Während die Flüssigkeit in der Durchflußkammer 44 zunächst außen am Innenteil 20 vorbeiströmt und anschließend durch die Stirnwand 64 ins Innere des Innenteils 20 umgelenkt wird, tritt die Flüssigkeit in der Durchflußkammer 46 zunächst durch die Öffnungen 96 im Boden des Innenteils 22 hindurch in den Innenbereich dieses Innenteils 22 ein, bevor sie durch die Stirnwand 68 in den äußeren Ringraum zwischen der Innenwand des Gehäuseabschnittes 10'' und dem Innenteil 22 umgelenkt wird. Nachdem die zylindrischen Fortsätze 90, 92 jeweils koaxial zu den hohlzylindrischen Innenteilen 20, 22 angeordnet sind, ergeben sich in jeder Durchflußkammer 44, 46 zwei zueinander konzentrische Ringräume, die von der Flüssigkeit in entgegengesetzten Richtungen durchströmt werden. Durch die seitliche Anordnung der Öffnungen 48, 50 ergibt sich insgesamt ein kompakterer Aufbau, wobei infolge der in einer jeweiligen Durchflußkammer 44, 46 vorgesehenen koaxialen Ringräume dennoch eine Verlängerung des Strömungsweges erzielt wird.

Im übrigen weist die in Fig. 3 dargestellte Ausführungsvariante im wesentlichen denselben Aufbau wie die Ausführungsform gemäß der Fig. 2 auf.

Grundsätzlich kann die jeweilige Flüssigkeit auch in der einen Durchflußkammer beispielsweise einem elektrischen Feld und in der anderen Durchflußkammer einem magnetischen Feld ausgesetzt sein. Es ist demnach möglich, in ein und demselben Gerät Felder unterschiedlicher Art vorzusehen.

## Patentansprüche

1. Gerät zur physikalischen Aufbereitung von Flüssigkeiten, insbesondere von Wasser, mit einem eine Einlaßöffnung (48) sowie eine Auslaßöffnung (50) aufweisenden Gehäuse (10), das wenigstens zwei in Strömungsrichtung der Flüssigkeit hintereinanderliegende Durchflußkammern (44, 46) umfaßt, zwischen denen eine Trennwand (18) mit wenigstens einer Durchgangsöffnung (52) angeordnet ist, über die die beiden Durchflußkammern (44, 46) miteinander verbunden sind, wobei die Flüssigkeit in den beiden Durchflußkammern (44, 46) jeweils einem elektrischen Feld oder jeweils einem magnetischen Feld ausgesetzt ist,
dadurch **gekennzeichnet,**
daß den beiden Durchflußkammern (44, 46) zur Erzeugung der elektrischen oder magnetischen Felder eine gemeinsame Elektrode (18; 20, 22, 78) bzw. ein gemeinsamer Pol zugeordnet ist und daß die gemeinsame Elektrode (18; 20, 22, 78) bzw. der gemeinsame Pol durch die Trennwand (18) gebildet oder von dieser getragen ist.

2. Gerät nach Anspruch 1,
dadurch **gekennzeichnet,**
daß die Durchflußkammern (44, 46) jeweils ringförmig ausgebildet und radial durch die Innenwand des Gehäuses (10) sowie ein vorzugsweise zentrales Innenteil (20, 22) begrenzt sind und daß diese ringförmigen Durchflußkammern (44, 46) in Axialrichtung hintereinander angeordnet sind.

3. Gerät nach Anspruch 1 oder 2,
dadurch **gekennzeichnet,**
daß die einzige Durchgangsöffnung (52) der zwischen zwei benachbarten ringförmigen Durchflußkammern (44, 46) angeordneten Trennwand (18) in Umfangsrichtung versetzt gegenüber der in die erste Durchflußkammer (44) mündenden Einlaßöffnung (48) sowie der der zweiten Durchflußkammer (46) zugeordneten Auslaßöffnung (50) angeordnet ist, in der ersten Durchflußkammer (44) ein erstes radiales Absperrelement (54) vorgesehen ist, welches in Umfangs- und Strömungsrichtung betrachtet einerseits vor der Einlaßöffnung (48) und andererseits hinter der Durchgangsöffnung (52) angeordnet ist, und in der zweiten Durchflußkammer (46) ein zweites radiales Absperrelement (56) vorgesehen ist, welches in Umfangs- und Strömungsrichtung betrachtet einerseits vor der Durchgangsöffnung (52) und andererseits hinter der Auslaßöffnung (50) angeordnet ist.

4. Gerät nach Anspruch 2 oder 3,
dadurch **gekennzeichnet,**
daß die unterschiedlichen Durchflußkammern (44, 46) zugeordneten Innenteile (20, 22) zumindest teilweise eine unterschiedliche axiale Länge besitzen.

5. Gerät nach einem der vorhergehenden Ansprüche,
dadurch **gekennzeichnet,**
daß das Gehäuse (10) zwei einen axialen Abstand zueinander aufweisende äußere Scheibenteile (12, 14) sowie einen zwischen diesen angeordneten Außenring (16) umfaßt und daß die wenigstens eine, zwischen den Scheibenteilen (12, 14) und dem Außenring (16) angeordnete, durch die ringförmigen Innenteile (20, 22) zumindest axial fixierte Trennwand (18) scheibenförmig, vorzugsweise ringscheibenförmig ausgebildet ist.

6. Gerät nach einem der vorhergehenden Ansprüche,
dadurch **gekennzeichnet,**
daß die Scheibenteile (12, 14) sowie die scheibenförmige Trennwand (18) als konzentrische Kreisscheiben und der Außenring (16) sowie die ringförmigen Innenteile (20, 22) als zu diesen Kreisscheiben konzentrische Kreisringe ausgebildet sind.

7. Gerät nach einem der vorhergehenden Ansprüche, bei dem die jeweilige Flüssigkeit einem elektrischen Feld ausgesetzt ist,
dadurch **gekennzeichnet,**
daß die beiden axial äußeren Scheibenteile (12, 14) sowie die scheibenförmige Trennwand (18) jeweils aus elektrisch leitendem Material bestehen und eine Elektrode bilden und daß der Außenring (16), die Innenteile (20, 22) sowie die Absperrelemente (54, 56) jeweils aus elektrisch isolierendem Material bestehen.

8. Gerät nach Anspruch 2,
dadurch **gekennzeichnet,**
daß das Gehäuse (10) mehrere rohrförmige Gehäuseabschnitte (10', 10'') umfaßt, die axial hintereinander angeordnet sind und jeweils eine der ringförmigen Durchflußkammern (44, 46) radial nach außen begrenzen, daß das einem jeweiligen Gehäuseabschnitt (10', 10'') zugeordnete, vorzugsweise zentrale Innenteil (20, 22) zylindrisch ausgebildet ist und die betreffende Durchflußkammer (44, 46) radial nach innen begrenzt, und daß die zwischen zwei benachbarten Durchflußkammern (44, 46) angeordnete Trennwand (18) zwischen den beiden zugeordneten Gehäuseabschnitten (10', 10'') fixiert ist und die den beiden benachbarten Durchflußkammern (44, 46) zugeordneten Innenteile (20, 22) oder ein für beide Durchflußkammern (44, 46) gemeinsames Innenteil trägt.

9. Gerät nach Anspruch 8,
dadurch **gekennzeichnet,**
daß die benachbarten rohrförmigen Gehäuseabschnitte (10', 10'') jeweils mit einem Ringflansch (58, 60) versehen sind und die betreffende Trennwand (18) an ihrem Rand (62) zwischen den Ringflanschen (58, 60) der beiden Gehäuseabschnitte (10', 10'') eingespannt ist.

10. Gerät nach Anspruch 8 oder 9,
dadurch **gekennzeichnet,**
daß die Trennwand (18) mit mehreren, in Umfangsrichtung verteilten und die beiden benachbarten Durchflußkammern (44, 46) miteinander verbindenden Durchgangsöffnungen (52) versehen ist.

11. Gerät nach einem der Ansprüche 8 bis 10,
dadurch **gekennzeichnet,**
daß die unterschiedlichen Durchflußkammern (44, 46) zugeordneten zylindrischen Innenteile (20, 22) bzw. Teilabschnitte eines gemeinsamen Innenteils zumindest teilweise eine unterschiedliche axiale Länge und/oder unterschiedliche Querschnittsabmessungen aufweisen.

12. Gerät nach einem der Ansprüche 8 bis 11,
dadurch **gekennzeichnet,**
daß die unterschiedlichen Durchflußkammern (44, 46) zugeordneten zylindrischen Innenteile (20, 22) bzw. Teilabschnitte eines gemeinsamen Inntenteils über einen axialen, durch eine Öffnung (76) in der Trennwand (18) hindurchtretenden Fortsatz (78) miteinander verbunden sind, der vorzugsweise an einem der beiden Innenteile (20, 22) vorgesehen und mit dem anderen Innenteil verbindbar, vorzugsweise verschraubbar ist, wobei die beiden Innenteile (20, 22) und der diese miteinander verbindende axiale Fortsatz (78) vorzugsweise aus demselben Material bestehen.

13. Gerät nach einem der Ansprüche 8 bis 12, bei dem die jeweilige Flüssigkeit einem elektrischen Feld ausgesetzt ist,
dadurch **gekennzeichnet,**
daß die beiden benachbarten rohrförmigen Gehäuseabschnitte (10', 10''), die beiden zugeordneten zylindrischen Innenteile (20, 22) sowie der diese verbindende axiale Fortsatz (78) jeweils aus elektrisch leitendem Material bestehen und eine Elektrode bilden, wobei die beiden über den axialen Fortsatz (78) miteinander verbundenen Innenteile (20, 22) eine für die beiden benachbarten Durchflußkammern (44, 46) gemeinsame Elektrode bilden, und daß die Trennwand (18) sowie gegebenenfalls die Stützflansche (68, 70) aus elektrisch isolierendem Material bestehen.

14. Gerät nach einem der Ansprüche 8 bis 13,
dadurch **gekennzeichnet,**
daß die beiden eine gemeinsame Elektrode bildenden Innenteile (20, 22) über ein an der Trennwand (18) vorgesehenes elektrisch leitendes Verbindungselement (80) und den axialen Fortsatz (78) von der jeweiligen Energiequelle beaufschlagbar sind.

15. Gerät nach einem der Ansprüche 8 bis 12, bei dem die jeweilige Flüssigkeit einem magnetischen Feld ausgesetzt ist,
dadurch **gekennzeichnet,**
daß die über den axialen Fortsatz (78) miteinander verbundenen Innenteile (20, 22) als für die beiden benachbarten Durchflußkammern (44, 46) gemeinsames Polteil ausgebildet sind.

## Claims

1. Apparatus for the physical preparation of liquids, in particular of water, comprising a housing (10) having an inlet opening (48) and also an outlet opening (50) including at least two throughflow chambers (44, 46) arranged in series in the flow direction of the liquid, with a partition wall (18) having at least one through-opening (52) being provided between them via which the two throughflow chambers (44, 46) are connected together, wherein the liquid in the two throughflow chambers (44, 46) is in each case exposed to an electrical field, or is in each case exposed to a magnetic field, characterised in that a common electrode (18; 20, 22, 78) or a common pole is associated with the two throughflow chambers (44, 46) to generate the electrical or magnetic fields; and in that the common electrode (18; 20, 22, 78) or the common pole is formed by the partition wall (18) or is carried by the latter.

2. Apparatus in accordance with claim 1, characterised in that the throughflow chambers (44, 46) are each of ring-like shape and are radially bounded by the inner wall of the housing (10) and also by a preferably central inner part (20, 22); and in that these ring-like throughflow chambers (44, 46) are arranged in series in the axial direction.

3. Apparatus in accordance with claim 1 or claim 2, characterised in that the single through-opening (52) of the partition wall (18) arranged between two adjacent ring-like throughflow chambers (44, 46) is displaced in the circumferential direction relative to the inlet opening (48), which opens into the first throughflow chamber (44) and also relative to the outlet opening (50) associated with the second throughflow chamber (46); in that a first radial blocking element (54) is provided in the first throughflow chamber (44) which is arranged when considered in the circumferential direction and the flow direction on the one hand in front of the inlet opening (48) and, on the other hand, after the throughflow opening (52), and in that a second radial blocking element (56) is provided in the second throughflow chamber (46) which, when considered in the circumferential and flow direction, is arranged on the one hand in front of the through-opening (52) and, on the other hand, behind the outlet opening (50).

4. Apparatus in accordance with claim 2 or claim 3, characterised in that the inner parts (20, 22) associated with the different throughflow chambers (44, 46) have a different axial length, at least in part.

5. Apparatus in accordance with one of the preceding claims, characterised in that the housing (10) has two outer disc parts (12, 14) having an axial spacing from one another and also includes an outer ring (16) arranged between the latter; and in that the at least one partition wall (18) arranged between the disc parts (12, 14) and the outer ring (16) and at least axially fixed by the ring-like inner parts (20, 22) is of disc-like shape, preferably of ring disc-like shape.

6. Apparatus in accordance with one of the preceding claims, characterised in that the disc parts (12, 14) and also the disc-like partition wall (18) are formed as concentric circular discs and the outer ring (16) and also the ring-like inner parts (20, 22) are formed as circular rings concentric to these circular discs.

7. Apparatus in accordance with one of the preceding claims in which the respective liquid is exposed to an electrical field, characterised in that the two axially outer disc parts (12, 14) and also the disc-like partition wall (18) respectively consist of electrically conductive material and form an electrode; and in that the outer ring (16), the inner parts (20, 22) and also the blocking elements (54, 56) respectively consist of electrically insulating material.

8. Apparatus in accordance with claim 2, characterised in that the housing (10) has a plurality of tubular housing sections (10', 10'') which are arranged axially in series and in each case bound one of the ring-like throughflow chambers (44, 46) radially outwardly; in that the preferably central inner part (20, 22) associated with a respective housing section (10', 10'') is of cylindrical shape and bounds the relevant throughflow chamber (44, 46) radially inwardly; and in that the partition wall (18) arranged between two adjacent throughflow chambers (44, 46) is fixed between the two associated housing sections (10', 10'') and carries the inner parts (20, 22) associated with the two adjacent throughflow chambers (44, 46) or a common inner part for the two throughflow chambers (44, 46).

9. Apparatus in accordance with claim 4, characterised in that the adjacent tubular housing sections (10', 10'') are each provided with a ring flange (58, 60) and the relevant partition wall (18) is clamped at its margin (62) between the ring flanges (58, 60) of the two housing sections (10', 10'').

10. Apparatus in accordance with claim 8 or claim 9, characterised in that the partition wall (18) is provided with a plurality of throughflow openings (52) distributed in the circumferential direction and connecting the two adjacent throughflow chambers (44, 46) to one another.

11. Apparatus in accordance with one of the claims 8 to 10, characterised in that the cylindrical inner parts (20, 22) or portions of a common inner part associated with the two throughflow chambers (44, 46) have a different axial length and/or different cross-sectional dimensions, at least in part.

12. Apparatus in accordance with one of the claims 8 to 11, characterised in that the cylindrical inner parts (20, 22) or portions of a common inner part associated with the different throughflow chambers (44, 46) are connected together via an axial projection (78) passing through an opening in the partition wall (18), with the projection preferably being provided on one of the two inner parts (20, 22) and being connectable and preferably screwable to the other inner part, with the two inner parts (20, 22) and the axial projection (78) connecting them to one another preferably consisting of the same material.

13. Apparatus in accordance with one of the claims 8 to 12, wherein the respective liquid is exposed to an electrical field, characterised in that the two adjacent tubular housing sections (10', 10''), the two associated inner parts (20, 22) and also the axial projection (78) connecting the latter respectively consist of an electrically conductive material and form an electrode, with the two inner parts (20, 22) connected together via the axial projection (78) forming a common electrode for the two adjacent throughflow chambers (44, 46); and in that the partition wall (18) and also, if necessary, the support flange (68, 70) consist of electrically insulating material.

14. Apparatus in accordance with one of the claims 8 to 13, characterised in that the two inner parts (20, 22) forming a common electrode can be energised from the respective energy source via an electrically conductive connection element (80) provided at the partition wall (18) and via the axial projection (78).

15. Apparatus in accordance with one of the claims 8 to 12, wherein the respective liquid is exposed to a magnetic field, characterised in that the inner parts (20, 22) which are connected together via the axial projection (78) are formed as a common pole part for the two adjacent throughflow chambers (44, 46).

## Revendications

1. Appareil pour le traitement physique de liquides, en particulier de l'eau, comprenant un boîtier (10) qui comporte une ouverture d'entrée (48) ainsi qu'une ouverture de sortie (50), ledit boîtier comprenant au moins deux chambres de passage (44, 46) disposées l'une derrière l'autre dans la direction d'écoulement du liquide, entre lesquelles est agencée une paroi de séparation (18) avec au moins une ouverture de passage (52), via laquelle les deux chambres de passage (44, 46) sont reliées l'une à l'autre, et le liquide dans les deux chambres de passage (44, 46) étant soumis respectivement à un champ électrique ou à un champ magnétique,
caractérisé en ce qu'une électrode commune (18 ; 20, 22, 78), ou respectivement un pôle commun, est associée aux deux chambres de passage (44, 46) pour produire le champ électrique ou magnétique, et en ce que l'électrode commune (18 ; 20, 22, 78), ou le pôle commun, est formée par la paroi de séparation (18) ou est portée par celle-ci.

2. Appareil selon la revendication 1, caractérisé en ce que les chambres de passage (44, 46) sont réalisées respectivement sous forme annulaire et sont délimitées radialement par la paroi intérieure du boîtier (10) ainsi que par une pièce intérieure de préférence centrale (20, 22), et en ce que ces chambres de passage annulaires (44, 46) sont agencées l'une derrière l'autre en direction axiale.

3. Appareil selon l'une ou l'autre des revendications 1 et 2, caractérisé en ce que l'ouverture de passage unique (52) de la paroi de séparation (18) agencée entre deux chambres de passage annulaires voisines (44, 46) est agencée de manière décalée en direction périphérique par rapport à l'ouverture d'entrée qui débouche dans la première chambre de passage (44) ainsi que par rapport à l'ouverture de sortie (50) associée à la seconde chambre de passage (46), en ce qu'il est prévu dans la première chambre de passage (44) un premier élément de blocage radial (54) qui est agencé, vu en direction périphérique et en direction d'écoulement, d'une part avant l'ouverture d'entrée (48) et d'autre part derrière l'ouverture de passage (52), et en ce qu'il est prévu dans la seconde chambre de passage (46) un second élément de blocage radial (56) qui est agencé, vu en direction périphérique et en direction d'écoulement, d'une part avant l'ouverture de passage (52) et d'autre part derrière l'ouverture de sortie (50).

4. Appareil selon l'une ou l'autre des revendications 2 et 3, caractérisé en ce que les pièces intérieures (20, 22) associées à différentes chambres de passage (44, 46) possèdent au moins partiellement une longueur axiale différente.

5. Appareil selon l'une quelconque des revendications précédentes, caractérisé en ce que le boîtier comporte deux parties en disques extérieures (12, 14) situées à distance axialement l'une de l'autre, ainsi qu'une bague extérieure (16) agencée entre ces parties en disques, et en ce que la paroi de séparation (18), agencée entre les parties en disques (12, 14) et la bague extérieure (16), susceptible d'être fixée au moins axialement par les pièces intérieures de forme annulaire (20, 22), est réalisée sous forme de disque, de préférence sous forme d'un disque annulaire.

6. Appareil selon l'une quelconque des revendications précédentes, caractérisé en ce que les parties en disques (12, 14) ainsi que la paroi de séparation en forme de disque (18) sont réalisées sous forme de disques circulaires concentriques, et en ce que la bague extérieure (16) ainsi que les pièces intérieures de forme annulaire (20, 22) sont réalisées sous forme de bagues circulaires concentriques à ces disques circulaires.

7. Appareil selon l'une quelconque des revendications précédentes, dans lequel le liquide considéré est soumis à un champ électrique, caractérisé en ce que les deux parties en disques extérieures axiales (12, 14) ainsi que la paroi de séparation en forme de disque (18) sont respectivement réalisées en matériau conducteur de l'électricité, et forment une électrode, et en ce que la bague extérieure (16), les pièces intérieures (20, 22), ainsi que les éléments de blocage (54, 56) sont respectivement réalisés en matériau isolant vis-à-vis de l'électricité.

8. Appareil selon la revendication 2, caractérisé en ce que le boîtier (10) comprend plusieurs tronçons de boîtier tubulaires (10', 10''), qui sont agencés axialement les uns derrière les autres et délimitent chacun l'une des chambres de passage annulaires (44, 46) radialement vers l'extérieur, en ce que la pièce intérieure (20, 22), de préférence centrale, associée à un tronçon de boîtier respectif (10', 10''), est réalisée de manière cylindrique et délimite radialement vers l'intérieur la chambre de passage considérée (44, 46), et en ce que la paroi de séparation (18) agencée entre deux chambres de passage voisines (44, 46) est fixée entre les deux tronçons de boîtier associés (10', 10''), et porte les pièces intérieures (20, 22) associées aux deux chambres de passage voisines (44, 46), ou bien une pièce intérieure commune pour les deux chambres de passage (44, 46).

9. Appareil selon la revendication 8, caractérisé en ce que les tronçons de boîtier tubulaires voisins (10', 10'') sont pourvus chacun d'une bride annulaire (58, 60), et en ce que la paroi de séparation concernée (18) est serrée par sa bordure (62) entre les brides annulaires (58, 60) des deux tronçons de boîtier (10', 10'').

10. Appareil selon l'une ou l'autre des revendications 8 et 9, caractérisé en ce que la paroi de séparation (18) est pourvue de plusieurs ouvertures de passage (52) réparties en direction périphérique et reliant l'une à l'autre les deux chambres de passage voisines (44, 46).

11. Appareil selon l'une quelconque des revendications 8 à 10, caractérisé en ce que les pièces intérieures cylindriques (20, 22) associées aux différentes chambres de passage (44, 46), ou bien les tronçons partiels d'une pièce intérieure commune, présentent au moins partiellement une longueur axiale différente et/ou des dimensions de section transversale différentes.

12. Appareil selon l'une quelconque des revendications 8 à 11, caractérisé en ce que les pièces intérieures cylindriques (20, 22) associées aux différentes chambres de passage (44, 46), ou bien les tronçons partiels d'une pièce intérieure commune, sont reliées l'une à l'autre via un prolongement axial (78) qui traverse une ouverture (76) dans la paroi de séparation (18), lequel est de préférence prévu sur l'une des deux pièces intérieures (20, 22) et est susceptible d'être relié à l'autre pièce intérieure, de préférence par vissage, et les deux pièces intérieures (20, 22) et le prolongement axial (78) qui les relie l'une à l'autre sont de préférence réalisés du même matériau.

13. Appareil selon l'une quelconque des revendications 8 à 12, dans lequel le liquide respectif est exposé à un champ électrique, caractérisé en ce que les deux tronçons de boîtier tubulaires voisins (10', 10''), les deux pièces intérieures cylindriques associées (20, 22), ainsi que le prolongement axial (78) qui relie celles-ci, sont respectivement réalisés en matériau conducteur de l'électricité et forment une électrode, les deux pièces intérieures (20, 22) reliées l'une à l'autre via le prolongement axial (78) formant une électrode commune pour les deux chambres de passage voisines (44, 46), et en ce que la paroi de séparation (18) ainsi que la bride de support éventuelle (68, 70) sont réalisées en matériau isolant vis-à-vis de l'électricité.

14. Appareil selon l'une quelconque des revendications 8 à 13, caractérisé en ce que les deux pièces intérieures (20, 22) qui forment une électrode commune, sont alimentées depuis la source d'énergie respective via un élément de liaison conducteur de l'électricité (80) prévu sur la paroi de séparation (18), et via le prolongement axial (78).

15. Appareil selon l'une quelconque des revendications 8 à 12, dans lequel le liquide considéré est soumis à un champ magnétique, caractérisé en ce que les pièces intérieures (20, 22) reliées l'une à l'autre au moyen du prolongement axial (78) sont réalisées sous forme d'une pièce polaire commune pour les deux chambres de passage voisines (44, 46).
